(19) Europäisches Patentamt / European Patent Office / Office européen des brevets

(11) **EP 4 184 217 A1**

(12) **EUROPEAN PATENT APPLICATION**

(43) Date of publication:
**24.05.2023 Bulletin 2023/21**

(21) Application number: **21209233.2**

(22) Date of filing: **19.11.2021**

(51) International Patent Classification (IPC):
**G01S 19/39** (2010.01)    **G01S 19/42** (2010.01)

(52) Cooperative Patent Classification (CPC):
**G01S 19/396; G01S 19/42**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Airbus Defence and Space GmbH 82024 Taufkirchen (DE)**

(72) Inventor: **WENDEL, Jan 82024 Taufkirchen (DE)**

(74) Representative: **Isarpatent Patent- und Rechtsanwälte Barth Charles Hassa Peckmann & Partner mbB Friedrichstrasse 31 80801 München (DE)**

(54) **METHOD FOR DETECTING OUTLIERS IN MEASUREMENTS OF GLOBAL NAVIGATION SATELLITE SYSTEMS**

(57) A method for detecting and excluding outliers in measurements of a global navigation satellite system (GNSS) receiver with respect to one or several GNSS satellite constellations comprises estimating an initial solution for a measurement of position, time and/or velocity of the GNSS receiver depending on n observations with regards to the satellite constellations; constructing a limited multidimensional grid of candidate solutions around the estimated initial solution uniformly distributed by a predetermined grid spacing in the space of the parameters to be estimated; calculating at each grid point an n-dimensional residual vector containing the residuals of each observation for the respective candidate solution, wherein each residual corresponds to a deviation of the respective observation from a predicted value; sorting the components of each residual vector according to magnitude; determining a minimum of a norm across the grid, the norm being defined at each grid point on basis of the respective residual magnitudes considering only the $h = n - k$ smallest residuals, wherein $k$ depends on the expected number of outlier observations; selecting the candidate solution corresponding to the determined minimum of the norm as best solution for the measurement of position, time and/or velocity; and excluding outlier observations from the selected best solution on basis of their respective residual magnitudes.

**Fig. 1**

EP 4 184 217 A1

**Description**

The present invention pertains to a method for detecting outliers in measurements of global navigation satellite systems.

Modern global navigation satellite system (GNSS) receivers use signals from multiple constellations like GPS, Galileo, Glonass and Beidou to calculate position, velocity, and time (PVT). Consequently, a large number of pseudorange measurements are available at each epoch. Especially for land-based applications like autonomous driving or train localization, severe multipath and/or non-line-of-sight (NLOS) tracking can occur, potentially leading to faulty pseudorange measurements, i.e. outliers. In order to prevent that these outliers corrupt the position and time solution, these outliers should be detected and excluded.

A common approach is to form subsets of pseudorange measurements, wherein for each subset a position and time solution is calculated. A metric like the weighted sum of squared errors (WSSE) can be used to check the consistency of the measurements contained in a subset, which allows identifying a subset containing only fault-free pseudoranges. Each subset of pseudorange measurements essentially represents a hypothesis on which pseudoranges are faulty, namely the pseudoranges not contained in the respective subset. The number of subsets that need to be considered results from the number of available pseudorange measurements n and the assumed number of simultaneous faults that can occur k:

$$\binom{n}{k} = \binom{n}{n-k} = \frac{n!}{k! \cdot (n-k)!}$$

With the large number of available pseudorange measurements due to the use of multiple constellations and the large number of possible simultaneous faults due to the demanding reception conditions land-based applications are faced with, the number of resulting subsets can grow extremely huge. The analysis of all these subsets/hypotheses can lead to a computational complexity that may be prohibitive.

Advanced Receiver Autonomous Integrity Monitoring (ARAIM) is able to handle multiple simultaneous faults by forming pseudorange subsets, see e.g. Blanch et al., "Advanced Raim User Algorithm Description: Integrity Support Message Processing, Fault Detection, Exclusion, and Protection Level Calculation," proceedings of the 25th International Technical Meeting of the Satellite Division of the Institute of Navigation (ION GNSS 2012), 17-21 September 2012, pp. 2828-2849. However, this technique is usually used for aeronautical applications, where local problems like excessive multipath and NLOS tracking do not need to be considered. This means that only a comparably small number of simultaneous faults need to be taken into account, implying that the computational complexity is manageable. Consequently, for harsh reception conditions with a considerable number of simultaneous faults, the applicability of this technique is limited.

Conventional RAIM algorithms can only handle single faults, see e.g. Parkinson et al., "Autonomous gps integrity monitoring using the pseudorange residual," NAVIGATION: Journal of the Institute of Navigation, 35(2), 1988.

The potential of robust estimation algorithms for RAIM has been recognized already, see e.g. Wang et al., "A Modified Residual-Based RAIM Algorithm for Multiple Outliers Based on a Robust MM Estimation," Sensors, 2020 Sep 21, 20(18):5407, which teaches to identify outliers by assessing pseudorange residuals obtained with a robust M-estimator.

Against this background, it is an object of the present invention to find solutions for detecting outliers in GNSS measurements that are computationally feasible even when the number of individual measurements and the number of simultaneous faults are huge.

This object is achieved by a method having the features of claim 1.

According to an aspect of the invention, a method for detecting and excluding outliers in measurements of a global navigation satellite system (GNSS) receiver with respect to one or several GNSS satellite constellations comprises estimating an initial solution for a measurement of position, time and/or velocity of the GNSS receiver depending on n observations with regards to the satellite constellations; constructing a limited multidimensional grid of candidate solutions around the estimated initial solution uniformly distributed by a predetermined grid spacing in the space of the parameters to be estimated; calculating at each grid point an n-dimensional residual vector containing the residuals of each observation for the respective candidate solution, wherein each residual corresponds to a deviation of the respective observation from a predicted value; sorting the components of each residual vector according to magnitude; determining a minimum of a norm across the grid, the norm being defined at each grid point on basis of the respective residual magnitudes considering only the $h = n - k$ smallest residuals, wherein k depends on the expected number of outlier observations; selecting the candidate solution corresponding to the determined minimum of the norm as best solution for the measurement of position, time and/or velocity; and excluding outlier observations from the selected best solution on basis of their respective residual magnitudes.

Thus, one idea of the present invention is to depart from the usual approach of investigating all possible subsets of observations, e.g. of pseudo-ranges, which can become numerically critical, and instead look only at a limited number of candidate solutions over a discrete and limited grid within the space of the parameters to be estimated. The invention follows the goal to find a solution for which the majority of observation residuals have a small magnitude, while in the presence of outliers some or all of the remaining residuals have a considerably larger magnitude. This is done be selecting an initial solution, e.g. by using an appropriate estimator known to the person of skill, and constructing an appropriately sized and spaced grid of candidate solutions around this central solution. In case a candidate solution is close to the true solution, the residuals of the non-faulty observations will be small, while the residuals of the faulty observations will be large, reflecting the magnitudes of the observation faults.

For each candidate solution, a norm is calculated on basis of the residual magnitudes considering only the $h = n - k$ smallest residuals (thereby excluding outliers when coming close to the true solution), wherein $k$ may be equal to or larger than the expected number of outliers. In other words, $h$ may represent the minimum number of non-faulty observations. Hereby, over-estimating the number of simultaneous faults is not critical, as long as enough redundancy for fault detection and exclusion is available. The candidate solution with the smallest norm of the $n - k$ smallest residuals is chosen as best solution. The magnitudes of all residuals of the best candidate solution are then assessed to identify the faulty observations.

The invention allows detecting and excluding multiple faulty measurements, e.g. pseudo-range measurements. This also holds in situations where a fault detection and exclusion by forming and analysing pseudo-range subsets is computationally not feasible due to a large number of pseudo-ranges and a large number of possible simultaneous faults, and the resulting exorbitant number of hypotheses. In this regard, the number of hypothesis is not growing with the number of pseudo-range measurements and the number of simultaneous faults.

It should be noted that the method is not limited to detecting outliers in pseudo-range measurements but can also be used for other measurements suffering from faults, e.g. GNSS Doppler measurements for calculating a GNSS velocity. In fact, the invention is useful for any estimation problem under following conditions:

- the measurements contain multiple outliers,
- the number of parameters to be estimated is small compared to the number of measurements,
- the possible parameter space can be covered reasonably with a grid, whereby the grid dimension equals the number of parameters.

Advantageous embodiments and improvements of the present invention are found in the subordinate claims.

According to an embodiment of the invention, the method may be applied to pseudo-range and/or Doppler measurements of a GNSS receiver.

In case of an application to pseudo-range measurements, a four dimensional grid would thus be provided in parameter space (three spatial dimensions plus time). In case of Doppler measurements, also the time derivatives would be relevant.

According to an embodiment of the invention, the grid spacing may be set depending on the expected magnitudes of the observation biases.

This means that the granularity of the grid of candidate solutions can be chosen sufficiently fine compared to the magnitude of observational biases that shall be detected.

According to an embodiment of the invention, a size of the grid may be limited depending on a maximum magnitude of the observation biases.

This embodiment is thus based on the assumption that a rough maximum magnitude of the observational biases that can occur is known and limited. Therefore, the observational uncertainties of an all-in-view solution is limited and is contained within a grid of candidate solutions. In order to ensure this, observations with larger biases may be excluded by other means beforehand, e.g. NLOS tracking is detectable from a low carrier-to-noise-density ratio (C/N0) and code-carrier coherency metrics.

According to an embodiment of the invention, a squared sum of residuals may be taken as norm.

It is to be understood however that instead of using a squared sum of residuals (which is an L2 norm from a mathematical point of view) any other meaningful norm known to the person of skill can be used as well.

According to an embodiment of the invention, the residuals may be weighted according to their variance within the norm.

Hence, in one example, a variance weighted norm may be used.

According to an embodiment of the invention, the grid may be two- or three-dimensional.

When the position can be constrained e.g. to a certain height, area and/or path, a three or two dimensional grid results. This would allow to reduce the number of hypothesis, to use a finer grid or to use a grid that covers a larger area in terms of position/distance and time, which in turn would further increase the efficiency and/or the quality of the proposed method.

According to an embodiment of the invention, the method may be applied to autonomous driving and/or train localization.

For example, in case the position can be constrained to a railway track, a two-dimensional grid results (one spatial dimension and time), which may allow to lower the computational effort as the number of hypotheses may be reduced. On the other hand, the grid may be provided with a smaller spacing and/or may be stretched over a larger area in space and time, which may improve the quality of the measurement.

On the other hand, if only a height is known (e.g. in autonomous driving), a three dimensional grid may result (two spatial dimensions and time).

According to an embodiment of the invention, the method may further comprise comparing a cost function for the selected best solution and for a second best solution. The second best solution may be obtained by assessing grid points separated from the best solution at least by a given minimum separation. The best solution may be kept only if the cost function of the second best solution is larger by predefined factor.

Thus, the selected best solution can be validated by comparing it with the second best solution sufficiently far away in order to assess whether the solution is meaningful. The solution shall only be considered valid, if the cost function value of the second best solution is significantly larger than the cost function value of the best solution. A reasonable factor may be, for example, in the order of 1.5. Depending on pseudo-range biases and pseudo-range measurement noise, for example, the cost function may have multiple local minima, which means that it might not be possible to identify with certainty which local minimum is corresponding to the correct solution.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.

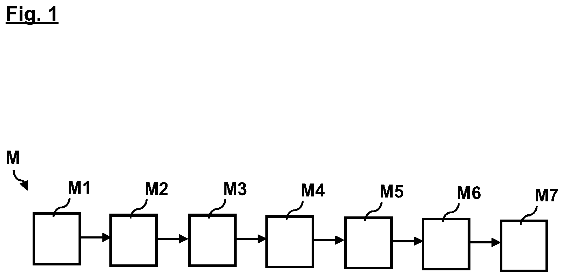

Fig. 1 shows a schematic flow diagram of a method according to an embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Figure 1 shows a schematic flow diagram of a method M according to an embodiment of the invention for detecting and excluding outliers in measurements of a GNSS receiver with respect to one or several GNSS satellite constellations. The method M of this exemplary embodiment is provided to detect and discard outliers in pseudo-range measurements, as will be described in the following. However, the method M may alternatively or additionally also be applied to the detection and exclusion of faulty Doppler measurements.

The method is based on two assumptions. First, a rough maximum magnitude of the pseudo-range biases that can occur is known and limited. Therefore, the position and time error of an all-in-view solution is limited and is contained within a grid of candidate solutions. Second, the granularity of the grid of candidate solutions is sufficiently fine compared to the magnitude of pseudo-range biases that shall be detected.

A vector $\rho = (\rho_1, \dots \rho_n)^\mathsf{T}$ of ideal, error-free pseudo-ranges is non-linearly related to the vector of true position and receiver clock error $x = (x, y, z, cT)^\mathsf{T}$ as follows:

$$\boldsymbol{\rho} = \boldsymbol{h}(\boldsymbol{x})$$

In case a least squares estimator or a robust estimator is used to calculate a position and time solution, the presence of pseudo-range biases $\delta\rho$ will lead to an estimated position and time solution $\hat{x}$, which deviates from the true solution $x$ by $\delta x$:

$$\widehat{\boldsymbol{x}} = \boldsymbol{x} + \boldsymbol{\delta x}$$

Based on the estimated position and time solution, pseudo-range predictions $\hat{\rho}$ can be calculated as follows:

$$\widehat{\boldsymbol{\rho}} = \boldsymbol{h}(\widehat{\boldsymbol{x}}) = \boldsymbol{h}(\boldsymbol{x} + \boldsymbol{\delta x}) \approx \boldsymbol{h}(\boldsymbol{x}) + \boldsymbol{H}\boldsymbol{\delta x}.$$

Here, $H$ is the Jacobian of $h( )$, which contains in the first three columns of each row the unit vector pointing from the GNSS antenna to the respective satellite, and in the fourth column an 1, if the clock error is expressed - like the pseudo-range - in the unit meters. Due to the assumption of limited magnitudes of pseudo-range biases, the impact of the position error $\delta x$ on $H$ is negligible. The pseudo-range residuals can be obtained as follows:

$$r = \hat{\rho} - (\rho + \delta\rho) = h(\hat{x}) - h(x) - \delta\rho \approx h(x) + H\delta x - h(x) - \delta\rho = H\delta x - \delta\rho$$

The vector $\delta\rho$ contains components that are zero, which correspond to the non-faulty pseudo-ranges, and non-zero entries corresponding to the biases of the observations. The residual vector $r$ can be calculated without any problem, but $\delta x$ and $\delta\rho$ are unknown and cannot be calculated from $r$, as the number of unknowns in $\delta x$ and $\delta\rho$ exceeds the number of equations (from the sum of two quantities it is not possible to infer the two quantities that were added).

Using a position and time solution that differs from $\hat{x}$ by $\Delta x$ also alters the calculated residual vector:

$$r_{\Delta x} = r + \Delta r = H\delta x - \delta\rho + H\Delta x$$

If by coincidence $\Delta x = -\delta x$ was chosen, one would obtain

$$r_{\Delta x} = r + \Delta r = -\delta\rho$$

In that case, the residual vector equals the vector of pseudo-range biases. In the error-free example considered here, the elements of $r_{\Delta x}$ corresponding to the non-faulty measurements would be zero, the other elements corresponding to the faulty pseudo-ranges take larger values corresponding to the respective pseudo-range biases. Of course, in reality $r_{\Delta x}$ will also be influenced by the nominal measurement noise.

Therefore, the goal is to find a vector $\Delta x$, for which the majority of elements have a small magnitude, while the remaining elements can have a considerably larger magnitude. This is done be selecting an initial value $\hat{x}$ using an appropriate estimator (in the usual vein known to the person of skill) and constructing a grid of candidate position and time solutions around this central value.

With reference to Fig. 1, the method M thus generally comprises under M1 estimating an initial solution for a measurement of position, time and/or velocity of the GNSS receiver depending on n observations with regards to the satellite constellations and under M2 constructing a limited multidimensional grid of candidate solutions around the estimated initial solution uniformly distributed by a predetermined grid spacing in the space of the parameters to be estimated.

The grid size is chosen considering the expected maximum magnitudes of pseudo-range biases that were not removed by other means, the grid spacing is chosen sufficiently fine compared to the expected magnitudes of pseudo-range biases. With three position coordinates and time as unknowns, a four dimensional grid results. For each grid point, the residual vector $r_{\Delta x}$ is calculated.

With the reference to Fig. 1, the method M correspondingly comprises under M3 calculating at each grid point an n-dimensional residual vector containing the residuals of each observation for the respective candidate solution, wherein each residual corresponds to a deviation of the respective observation from a predicted value.

Sorting the elements of $r_{\Delta x}$ in ascending order of magnitude yields a sorted residual vector $r_{\Delta x,sorted}$ (step M4 in Fig. 1).The minimum number of non-faulty measurements is denoted with $h$, then an estimate of the desired vector $\Delta x$ may be given by (step M5 and M6 in Fig. 1):

$$\Delta\hat{x} = \underset{\Delta x}{\mathbf{argmin}} \sum_{i=1}^{h} \left| r_{\Delta x,i,sorted} \right|^2$$

Of course, instead of using here a mathematical L2 norm, any other meaningful norm can be used as well. Furthermore, the squared residuals can be weighted according to their variance. As stated previously, under-estimating the number of fault-free measurements is not critical, as long as enough redundancy is still available to identify the faulty measurements. This is closely related to the breakdown point of robust estimators.

Finally, outlier observations are excluded from the selected best solution on basis of their respective residual magnitudes (step M7 in Fig. 1).

As a simple example, consider a four dimensional grid covering in each dimension $\pm 100$ m with a grid spacing of 20 m. In that case the number of hypothesis that need to be checked is $11^4 = 14641$. If the number of pseudoranges and the number of possible simultaneous faults is small, then these are surely more hypothesis than the number of pseudo-range subsets that would have to be analyzed in ARAIM, for example. On the other hand, with 30 pseudo-ranges - which is a realistic value when using three constellations - and 10 simultaneous faults, more than 30 million subsets would need to be analyzed. For each subset, a matrix inversion would have to be performed, which can be numerically critical.

The method described herein on the other hand calculates for each hypothesis only *r + H*△*x,* which is then sorted, followed by squaring and summing the first *h* elements, which is considerably less demanding.

In case the position can be constrained e.g. to a railway track, a two-dimensional grid results. This allows e.g. to reduce the number of hypothesis, to use a finer grid, or to use a grid that covers a larger area in terms of distance and time. In case only the height is known, a three dimensional grid results.

In any case, it is advisable to verify the solution by comparing the cost function $\sum_{i=1}^{h}\left|r_{\Delta x,i,sorted}\right|^2$ of the best solution with the cost function of the second best solution, whereby the second best solution is obtained by assessing only grid points that are sufficiently separated from the best solution. The solution shall only be considered valid, if the cost function value of the second best solution is significantly larger than the cost function value of the best solution, a reasonable factor is in the order of 1.5. Depending on the pseudo-range biases and the pseudo-range measurement noise, the cost function can have multiple local minima, and it might not be possible to identify with certainty which local minimum is corresponding to the correct solution.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

**List of reference signs**

M          method
M1-M7     method steps

**Claims**

1.   Method (M) for detecting and excluding outliers in measurements of a global navigation satellite system, GNSS, receiver with respect to one or several GNSS satellite constellations, the method (M) comprising:

  estimating (M1) an initial solution for a measurement of position, time and/or velocity of the GNSS receiver depending on n observations with regards to the satellite constellations;
  constructing (M2) a limited multidimensional grid of candidate solutions around the estimated initial solution uniformly distributed by a predetermined grid spacing in the space of the parameters to be estimated;
  calculating (M3) at each grid point an n-dimensional residual vector containing the residuals of each observation for the respective candidate solution, wherein each residual corresponds to a deviation of the respective observation from a predicted value;
  sorting (M4) the components of each residual vector according to magnitude;
  determining (M5) a minimum of a norm across the grid, the norm being defined at each grid point on basis of the respective residual magnitudes considering only the h = n - k smallest residuals, wherein k depends on the expected number of outlier observations;
  selecting (M6) the candidate solution corresponding to the determined minimum of the norm as best solution for the measurement of position, time and/or velocity; and
  excluding (M7) outlier observations from the selected best solution on basis of their respective residual magnitudes.

2.   Method (M) according to claim 1, wherein the method is applied to pseudo-range and/or Doppler measurements of a GNSS receiver.

3. Method (M) according to claim 1 or 2, wherein the grid spacing is set depending on the expected magnitudes of the observation biases.

4. Method (M) according to one of the claims 1 to 3, wherein a size of the grid is limited depending on a maximum magnitude of the observation biases.

5. Method (M) according to one of the claims 1 to 4, wherein a squared sum of residuals is taken as norm.

6. Method (M) according to one of the claims 1 to 5, wherein the residuals are weighted according to their variance within the norm.

7. Method (M) according to one of the claims 1 to 6, wherein the grid is two- or three-dimensional.

8. Method (M) according to claim 7, wherein the method is applied to autonomous driving and/or train localization.

9. Method (M) according to one of the claims 1 to 8, further comprising:
comparing a cost function for the selected best solution and for a second best solution, wherein the second best solution is obtained by assessing grid points separated from the best solution at least by a given minimum separation, wherein the best solution is kept only if the cost function of the second best solution is larger by predefined factor.

<u>Fig. 1</u>

M

M1  M2  M3  M4  M5  M6  M7

Europäisches
Patentamt
European
Patent Office
Office européen
des brevets

# EUROPEAN SEARCH REPORT

**Application Number**

EP 21 20 9233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WANG WENBO ET AL: "A Modified Residual-Based RAIM Algorithm for Multiple Outliers Based on a Robust MM Estimation", SENSORS, vol. 20, no. 18, 21 January 2020 (2020-01-21), page 5407, XP055914038, CH ISSN: 1424-8220, DOI: 10.3390/s20185407 * paragraph [04.1] – paragraph [04.3]; figures 1,2 * | 1-9 | INV. G01S19/39 G01S19/42 |
| A | CN 109 542 084 B (UNIV BEIHANG) 12 June 2020 (2020-06-12) * paragraphs [0036] – [0057]; figures 1-4 * | 1-9 | |
| A | US 2013/141276 A1 (ARTUSHKIN IGOR [RU] ET AL) 6 June 2013 (2013-06-06) * paragraphs [0118] – [0141]; figures 1-4 * | 1-9 | |

**TECHNICAL FIELDS SEARCHED (IPC)**

G01S

The present search report has been drawn up for all claims

| Place of search | Date of completion of the search | Examiner |
|---|---|---|
| Munich | 4 May 2022 | Ciccarese, Corrado |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 21 20 9233**

This annex lists the patent family members relating to the patent documents cited in the above-mentioned European search report.
The members are as contained in the European Patent Office EDP file on
The European Patent Office is in no way liable for these particulars which are merely given for the purpose of information.

**04-05-2022**

| Patent document cited in search report | | Publication date | Patent family member(s) | | Publication date |
|---|---|---|---|---|---|
| CN 109542084 | B | 12-06-2020 | NONE | | |
| US 2013141276 | A1 | 06-06-2013 | US | 2013141276 A1 | 06-06-2013 |
| | | | US | 2015301190 A1 | 22-10-2015 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BLANCH et al.** Advanced Raim User Algorithm Description: Integrity Support Message Processing, Fault Detection, Exclusion, and Protection Level Calculation. *proceedings of the 25th International Technical Meeting of the Satellite Division of the Institute of Navigation (ION GNSS 2012),* 17 September 2012

- **PARKINSON et al.** Autonomous gps integrity monitoring using the pseudorange residual. *NAVIGATION: Journal of the Institute of Navigation,* 1988, vol. 35 (2
- **WANG et al.** A Modified Residual-Based RAIM Algorithm for Multiple Outliers Based on a Robust MM Estimation. *Sensors,* 21 September 2020, vol. 20 (18), 5407